**Europäisches Patentamt**

**European Patent Office**

**Office européen des brevets**

(19)

(11) Publication number: **0 062 935**

**A1**

(12) # EUROPEAN PATENT APPLICATION

(21) Application number: **82200299.4**

(22) Date of filing: **08.03.82**

(51) Int. Cl.³: **G 01 M 11/08**
**G 01 N 21/90**

(30) Priority: **27.03.81 IT 6743381**

(43) Date of publication of application:
**20.10.82 Bulletin 82/42**

(84) Designated Contracting States:
**AT BE CH DE FR GB LI LU NL SE**

(71) Applicant: **BONOTTO s.n.c. di Bonotto Giovanni & C.**
**Costruzioni Meccaniche**
**Strada di Lanzo n. 430**
**I-10156 Turin(IT)**

(72) Inventor: **Bonotto, Giovanni**
**Via Giulio N. 11**
**I-10086 Rivarolo Canavese(IT)**

(74) Representative: **Robba, Eugenio**
**Studio "INTERPATENT" via Caboto 35**
**I-10129 Turin(IT)**

(54) **Apparatus for in-line checking the clinch joint of phial caps.**

(57) The invention relates to an apparatus for in-line checking the clinch joint of the cap of phials, particularly phials produced by the pharmaceutical industry.

The apparatus comprises a conveyor belt, an electronic station for checking the clinch joint (4) of the cap and storing the information, a device for rotating the phial, a device for expelling the phials to be discarded, a control and check panel with a counter for the pieces.

The electronic checking station comprises a series of IR radiation emitting diodes (5) and a series of photocell detectors (7) as well as electronic components for discrimination of the electric response indicating whether the clinch joint (4) of a phial cap is defective or normal, and for processing the corresponding signals.

FIG. 1

-1-

"Apparatus for in-line checking the clinch joint of phial caps"

The present invention relates to an apparatus for in-line checking the clinch joint of phial caps.

Particularly in the pharmaceutical industry it is very important to check the quality of the clinch joint of the cap of the produced phials. In fact, an imperfect or defective clinch joint corresponds to a condition of a cap which is not very well closed with consequent potential deterioration of the contents of the phial.

On the other hand, the system of closing and clinching the cap is obtained automatically and this involves numerous imperfections.

It is therefore indispensable to check each produced phial individually. Hitherto this check was carried out by operators who visually examined each phial with a great waste of manpower and results that were not always reliable.

Alternatively a visual statistic check was made on a set of phial samples. Nevertheless the phials which are not checked may still be not in conformity with the standard and therefore the statistic check is not very reliable.

It is reported that also a machine has been brought on the market which automatically effects this check, but it is a very costly and complex machine comprising electronic devices which are so sophisticated that any maintenance and/or repair operation is made problematic.

It would therefore be desirable to have an apparatus capable of effecting this check by itself automatically without being excessively expensive or causing serious problems with regard to maintenance operations.

It is the object of the present invention to provide an apparatus capable of achieving this result; this apparatus substantially comprises a bench for movably supporting a conveyor device and thereabove an electronic station for detecting the condition of clinching of the cap, a device for rotating the phial about its own axis, a device for expelling the phials which are not in conformity with the standard as well as an electric control and check panel.

The conveyor device is driven by a gearmotor and constructed to permit the detecting station to be mounted in a very limited space.

The detecting station permits the quality of the clinch joint of the cap of the phials to be checked electronically during their movement on the conveyor belt.

Checking of the clinch joint of the cap is carried out continuously by means of a sensor system which will be described in greater detail hereinafter and which comprises sensors for storing the information relating to any phials whose closure may be defective, for withdrawing them then automatically from the conveyor belt.

Withdrawal of the defective phials is made automatically in a withdrawal station arranged downstream of the reading station.

A condition required for achieving perfect operation of the system is that the phials should have a cylindrical shape and move continuously in single file at a maximum speed of 8 m/min.

This speed permits to check more than 20,000 phials per hour with each phial having an outside diameter of 23 mm.

The apparatus is so constructed as to permit the passage of any phial having a cylindrical shape irrespective of its outside dimensions.

All the various stations are easily adjustable by means of micrometer adjusting screws whereas the electronic sensors have a fixed setting.

The electric control panel, in addition to the usual switches and pilot lamps, also contains a pair of electric workpiece counters which add up the number of phials discarded in the clinch joint checking station and those found to be faultless after checking.

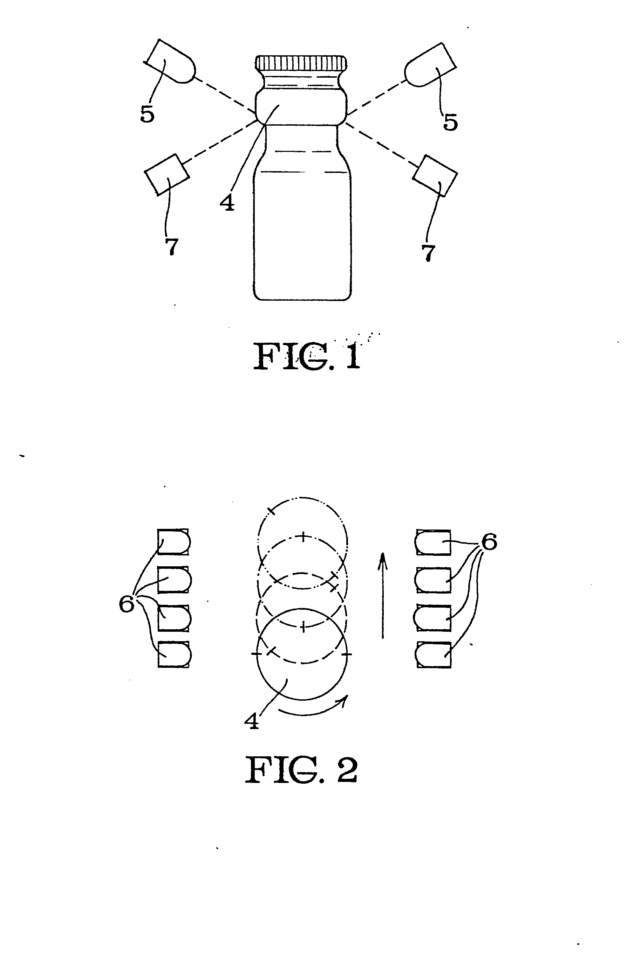

The electronic station for detecting the quality of the clinch joint of the cap according to the invention substantially comprises a series of infrared radiation emitting diodes and a series of detectors for detecting the IR radiation emitted by the diode, as schematically shown in Fig. 1.

Generally speaking, as far as the clinch joint of the cap is concerned, the following conditions may be encountered:

a) the clinch joint is perfect; when a beam of IR radiations meets the cap, the radiation is reflected by the outside portion of the cap which is painted by a type of light reflecting paint;

b) the clinch joint is completely or partially missing; when a beam of IR radiations meets the cap, the radiation is absorbed by the glass of the phial;

c) the clinch joint is imperfect, i.e. it is partly lifted; for example, the flap is bent outwardly. When a beam of IR radiations meets the cap at this point, the radiation is only very little reflected because it penetrates on to the inner surface of the cap which is covered with not very reflecting opaque paint.

These three possible conditions therefore cause different reflection phenomena of the IR radiation which is picked up by the photocell detector and leads to the production of electric responses which are different in the three cases.

As previously mentioned, the device according to the invention is provided with electronic storing systems known per se for storing the electric responses produced in the above three cases and for actuating, when the produced electric responses correspond to the conditions b) and c), a device for expelling the phials which are not perfectly closed.

The electronic station for detecting the quality of the clinch joint of the cap according to the invention comprises a series of emitter diodes and detectors arranged on either side of the conveyor device. In a preferred embodiment of the invention each emitter is arranged vertically above the corresponding detector and several emitter-detector pairs are arranged in each side of the conveyor device.

While the phial is moved by the conveyor device, an appropriate device imparts to the phial a rotating movement about its longitudinal axis so that the entire circumference of the phial is exposed to the series of emitters and detectors.

Each emitter-detector pair thus effects a check on a portion of the surface of the cap and the entire series of emitters and detectors checks the entire surface of the cap. The number of emitter-detector pairs is a matter of choice at the discretion of one skilled in the art and is determined by the accuracy of checking to be obtained although the Applicant has found that four pairs of electronic sensors for each side of the conveyor belt already permit to effect a complete check of the condition of the clinch joint.

On the basis of what has been said above it is evident that the apparatus according to the invention must be provided with a device for rotating the phial. Said device may be of various nature, for example, it may be a wire engaging the phial and movable in the same direction as the conveyor at a higher speed than the speed of movement of the conveyor to thereby impart a rotation to the phial.

The expelling device may also be of various nature in its practical realization provided that it comes within the scope of the present invention. By way of a non limiting example, the expelling device may comprise an electromagnetic hammer or a pneumatically operating hammer or a gear transmission or the like.

The phials which are not in conformity with the standard and therefore are discarded, are counted by a workpiece counter arranged on the electric control panel and in the same manner the faultless phials are counted by a totalizer.

The electronic detecting and storing station described above operates continuously and it is the phial itself that generates the "clock" signal for setting the station in reading condition as the phial advances on the conveyor device. In other words, the system does not read and therefore store the information until the phial itself is in the correct position in front of the radiation emitter and gives the so-called "clock" signal which starts the checking cycle for each phial.

This "clock" signal may be produced by known means of various types. By way of non limiting examples, it is possible to use electronic means such as a photodiode or optical means such as a photocell or a mechanically operated switch or an ultrasound barrier or other similar or equivalent means, all actuated by the phial itself during its translating movement.

The translating movement of the phial may be continuous or intermittent and in both cases the checking which is the purpose of the present invention may be carried out.

A preferred embodiment of the invention will now be described by way of a non limiting example with reference to the accompanying drawings, in which:

Fig. 1 schematically shows a detail of the position of an emitter-detector pair relative to the cap of the phial;

Fig. 2 schematically shows the plan view of the series of emitters and detectors relative to the phial;

Fig. 3 schematically shows the assembly of the checking apparatus according to the invention in a front view;

Fig. 4 is the schematic side view of the apparatus.

Referring to Fig. 1, the diode 5 emits a beam of IR radiations which meets the clinch joint of the cap 4 of the phial; said clinch joint may be in the condition a, b or c discussed previously. The beam of radiations is therefore differently reflected depending on whether the clinch joint is in the condition a, b or c and then encounters the detector which will produce a different electric response in consequence of the different reflection to which the radiation is subjected.

According to this preferred embodiment of the invention, for each pair of sensors the emitter is placed vertically above the photocell detector (see Fig. 1) so that their longitudinal axes form an acute angle and the vertex of the angle is located exactly at the height of the clinch joint of the cap, which is the area to be checked.

This particular arrangement and in particular the selected angle permit to obtain the same electric response from the detector for the conditions b) and c) of the clinch joint of the cap, i.e. when the phial is to be discarded.

In this manner only two electric responses are obtained from the photocell detector, one for the case a) and one for both cases b) and c), whereby processing of the signal is simplified.

However, it should be evident that it is still possible to discriminate between the case a) and the cases b) and c) even if these latter supply different electric responses and even if the emitter 5 and the detector 7 are not set in the particular arrangement described above.

Fig. 2 shows the series of emitter and detector pairs 6 each of which checks a portion of the surface of the cap. The phial proceeds along a rectilinear path between the two rows of electronic sensors and simultaneously rotates about its own axis as can be seen by the reference notches on the circumference of the cap so that the entire surface of the cap is exposed to the beam of radiations coming from the emitters.

Appropriate "clock" devices, not shown in the drawing, are interposed between each pair of electronic sensors so that the system is set in reading condition only when the phial is correctly positioned in front of the emitter and detector pair. In this preferred embodiment of the invention, the clock signal is obtained from emitter diodes.

In this manner it is the phial itself that gives the "clock" signal for setting the system in reading condition during the translating movement of the phial.

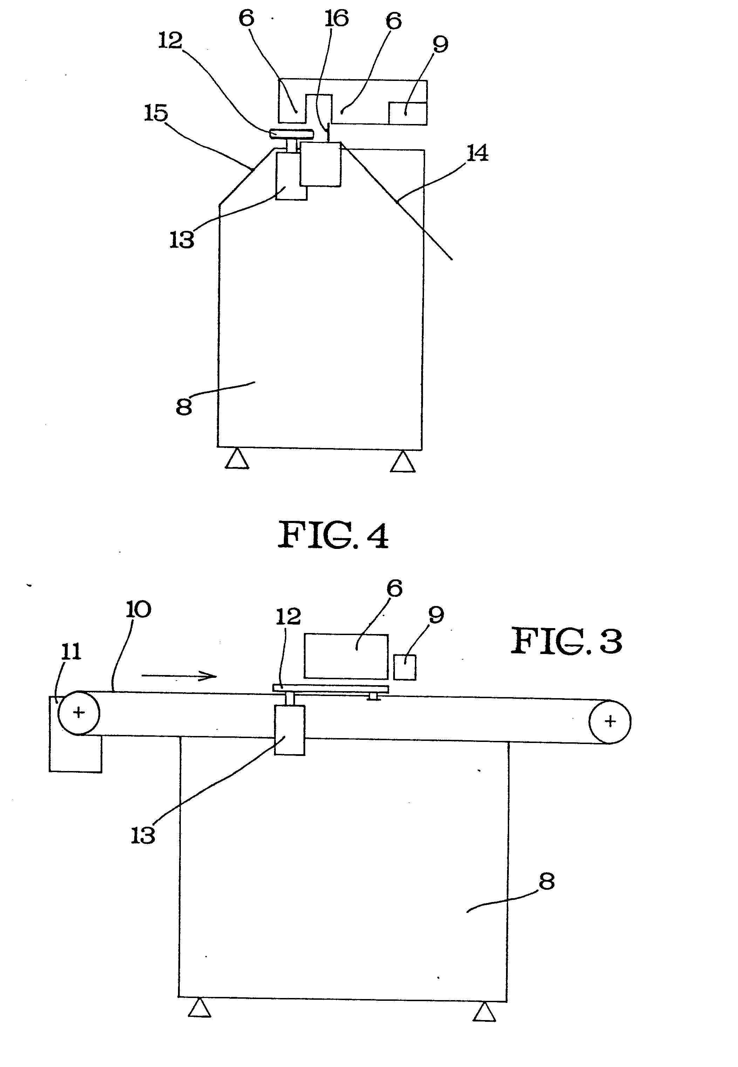

When the electric response of the photocell detectors corresponds to the condition b) or c), the expelling device 9 shown in Fig. 3 is actuated, which is arranged downstream of the series of electronic sensors.

Referring to Fig. 3, which is a schematic front view of the apparatus according to the invention, the bench 8 is the supporting structure of the apparatus and arranged above it is the conveyor device 10 of the conveyor belt type. The gearmotor 11 drives the conveyor belt 10. Rotation of the phials about their own axis is ensured by a belt device 12 which engages the phials at a speed higher than that of the conveyor belt, thus imparting rotation thereto. This belt device is connected to the gearmotor 13 of variable speed as the gearmotor 11. In the area in which the belt device 12 is arranged and therefore the area in which the phials rotate, there is arranged the electronic detecting station 6 which contains the series of sensors shown schematically and the electronic means for discrimination and storing of the electric responses of the detectors. Located downstream of the detecting station is the electromagnetic device 9 for expelling the phials having a defective closure.

Fig. 4, which is a schematic side view of the apparatus according to the invention, also shows the chute 14 for the descent of the discarded phials as well as the guide member 16 for laterally retaining the phials. Finally, the electric control panel 15 contains the conventional control

0062935

devices and the workpiece counters for counting the "good" phials and the discarded ones.

However, various practical embodiments of the apparatus according to the invention are possible. For example, checking of the clinch joint along the entire circumference of the cap may be obtained by rotating the entire series of emitters and detectors instead of rotating the phial. Still the desired final effect is achieved and the most appropriate means for achieving this effect can easily be deduced by one skilled in the art, still within the scope of the present invention.

As previously explained, the phials to be checked coming from other steps of the production cycle are fed on to the front conveyor belt 10 on which they proceed in single file and usually closely one behind another. The belt 10 conveys the phial and when it is correctly positioned in front of each emitter diode 5, the system is set in reading condition by clock signals obtained from other emitter diodes interposed between the pairs of emitters and detectors. The reflected radiation reaches the photocell detector 7 and the electric response is stored and may, or may not, activate the expelling device 9. If this device is actuated, the phial is removed on to the chute 14. The workpiece counter arranged on the control and check panel registers both the faultless phials and those which have been discarded, and exhibits the total number thereof.

In a copending application of the same Applicant there is described a device for checking the liquid level in phials, also with particular reference to the phials produced by the pharmaceutical industry.

Said device may be associated with the one forming the subject matter of the present invention so as to obtain together an apparatus adapted to check both the liquid level and the quality of the clinch joint of the phials.

The scope of the present invention will now be better defined by the following claims.

0062935

CLAIMS :-

1. Apparatus for in-line checking the clinch joint
of the cap of phials, comprising:

a) a conveyor device for conveying the phial;

b) a device for rotating the phial;

c) a series of radiation emitters;

d) a series of radiation detectors;

e) electronic means for discrimination and storing
of the electric response of the detector;

f) means for setting in reading condition the devices
of points c), d) and e);

g) means for expulsion of defective phials;

h) a control and check panel.

2. Apparatus according to claim 1, characterized in
that the conveyor device for conveying the phial is a
conveyor belt of variable speed.

3. Apparatus according to claim 1, characterized in
that the device for rotating the phial is a belt device
of variable speed.

4. Apparatus according to claim 1, characterized in
that the radiation emitter is so arranged as to direct the
beam toward the clinch joint of the phial cap.

5. Apparatus according to the preceding claims,
characterized in that the radiation emitter is arranged
vertically above the radiation detector.

6. Apparatus according to the preceding claims,
characterized in that two rows of pairs of emitters and
detectors are arranged on the sides of the conveyor
device.

7. Apparatus according to the preceding claims, characterized in that the radiation emitter is a photodiode.

8. Apparatus according to the preceding claims, characterized in that the radiation emitter is an infrared radiation emitting photodiode.

9. Apparatus according to claim 1, characterized in that the detector is a phototransistor.

10. Apparatus according to claim 1, characterized in that the means for setting in reading condition the devices of points c), d) and e) are actuated by the phial itself during its translating movement.

11. Apparatus according to the preceding claims, characterized in that the means for setting in reading condition the devices of points c), d) and e) are selected from the group consisting of photodiodes, photocells, mechanical switches and ultrasound switches.

12. Apparatus according to claim 1, characterized in that the means for expelling the defective phials is selected from the group consisting of electromagnets, solenoid valves and electric gearmotors.

FIG. 1

FIG. 2

0062935

FIG. 4

FIG. 3

European Patent
Office

**EUROPEAN SEARCH REPORT**

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| Y | DE - A1 - 2 940 122 (BARRY-WEHMILLER CO.) <br> * claim 1; fig. 1 to 3 * <br> * claim 2 * <br> & US - A - 4 213 042 <br> --- | 1,4,5 <br> 8 | G 01 M 11/08 <br> G 01 N 21/90 |
| Y | DE - B2 - 2 415 592 (PHYSITRONIK GERÄTE-BAU) <br> * claims 1, 3, 5 * <br> & GB - A - 1 494 426 <br> --- | 1 | |
| Y | DE - A - 2 302 032 (EMHART ZÜRICH S.A.) <br> * claim 1 * <br> ---- | 1-3 | **TECHNICAL FIELDS SEARCHED (Int.Cl. ³)** <br><br> G 01 M 11/08 <br> G 01 N 21/90 |

CATEGORY OF
CITED DOCUMENTS

X: particularly relevant if
taken alone
Y: particularly relevant if
combined with another
document of the same
category
A: technological background
O: non-written disclosure
P: intermediate document
T: theory or principle
underlying the invention
E: earlier patent document,
but published on, or after
the filing date
D: document cited in the
application
L: document cited for other
reasons

&: member of the same patent
family,

corresponding document

| X | The present search report has been drawn up for all claims | | |
|---|---|---|---|
| Place of search <br> Berlin | Date of completion of the search <br> 29-06-1982 | Examiner <br> KÖHN | |

EPO Form 1503.1   06.78